# EUROPÄISCHE PATENTSCHRIFT

(11) **EP 2 156 621 B1**
(45) Veröffentlichungstag und Bekanntmachung des Hinweises auf die Patenterteilung: **28.10.2015**
(21) Anmeldenummer: 07726087.5
(22) Anmeldetag: 15.06.2007
(51) Int. Cl.: H04W 72/04, H04W 4/08, H04W 84/12

(54) **VERFAHREN ZUM BETREIBEN EINES KOMMUNIKATIONSSYSTEMS, KOORDINATIONSKNOTEN EINES KOMMUNIKATIONSSYSTEMS SOWIE KOMMUNIKATIONSSYSTEM**
METHOD FOR OPERATING A COMMUNICATION SYSTEM, COORDINATION NODE IN A COMMUNICATION SYSTEM AND COMMUNICATION SYSTEM
PROCÉDÉ POUR FAIRE FONCTIONNER UN SYSTÈME DE COMMUNICATION, NOEUD DE COORDINATION D'UN SYSTÈME DE COMMUNICATION ET SYSTÈME DE COMMUNICATION

(43) Veröffentlichungstag der Anmeldung: 24.02.2010
(73) Patentinhaber: Siemens Aktiengesellschaft, 80333 München (DE)
(72) Erfinder: ERLMANN, Markus, 90449 Nürnberg (DE); GREBNER, Jens, 90489 Nürnberg (DE)
(86) Internationale Anmeldenummer: PCT/EP2007/005438
(87) Internationale Veröffentlichungsnummer: WO 2008/151654

(56) Entgegenhaltungen:
- EP-A- 1 770 923
- WO-A-2006/049415
- WO-A-2007/021269
- US-A1- 2003 137 993

## Beschreibung

Ein Verfahren zum Betreiben eines Kommunikationssystems ist beispielsweise aus der Spezifikation des Standards IEEE 802.15.4 "IEEE Standard for Information technology, Telecommunications and information exchange between systems, Local and metropolitan area networks, Specific requirements, Part 15.4: Wireless Medium Access Control (MAC) and Physical Layer (PHY) Specifications for Low-rate Wireless Personal Area Networks (LR-WPANs), IEEE Computer Society, October 1, 2003" bekannt. Gemäß diesem Standard wird ein Kommunikationssystem in Form eines so genannten "Wireless Personal Area Networks (WPAN)" zur Datenübertragung über vergleichsweise geringe Entfernungen verwendet. Dabei kann ein entsprechendes Kommunikationssystem aus mehreren Netzknoten bestehen, die beispielsweise sternförmig um einen Koordinationsknoten in Form eines so genannten "PAN Coordinator" angeordnet sein können. Von dem Koordinationsknoten kann den Netzknoten des Kommunikationssystems jeweils eine Adresse in Form einer so genannten Kurzadresse ("short address") zur Kommunikation innerhalb des Kommunikationssystems zugeordnet werden. Dabei werden die Netzknoten im Rahmen des Standards auch als Gerät ("device") bezeichnet.

Da beispielsweise insbesondere im Bereich der Automatisierungstechnik die Anforderung besteht, dass etwa Prozesswerte von Sensoren und Aktoren vorhersagbar, zuverlässig und mit einer garantierten Latenzzeit ausgetauscht werden können, besteht bei dem bekannten Verfahren darüber hinaus die Möglichkeit, dass zur Datenübertragung ein Übertragungsrahmen in Form eines so genannten "Superframe" verwendet wird. Dieser stellt neben Zeitschlitzen, auf die alle Netzknoten des Kommunikationssystems konkurrierend zugreifen können, so genannte "garantierte Zeitschlitze" (Guaranteed Time Slots, GTS) bereit. Entsprechende garantierte Zeitschlitze zeichnen sich dadurch aus, dass sie innerhalb des Übertragungsrahmens jeweils ausschließlich einem der Netzknoten des Kommunikationssystems zur alleinigen, d.h. wettbewerbsfreien, Nutzung zur Datenübertragung zur Verfügung gestellt werden. Dies geschieht bei dem bekannten Verfahren derart, dass der Koordinationsknoten in Form des "Coordinator" einen oder mehrere der entsprechenden garantierten Zeitschlitze dem betreffenden Netzknoten anhand dessen Adresse, d.h. beispielsweise anhand seiner Kurzadresse, zuweist. Dies hat zur Folge, dass ausschließlich der durch die betreffende Adresse identifizierte Netzknoten diesen garantierten Zeitschlitz innerhalb des Übertragungsrahmens zur Datenübertragung nutzen darf. Hierdurch ist sichergestellt, dass der betreffende Netzknoten innerhalb einer garantierten, d.h. unter allen Umständen eingehaltenen, Latenzzeit Daten an den Koordinationsknoten übertragen kann.

Ein solches Verfahren ist auch aus der US 2003/0137993 bekannt, welche Superframes und die Verwendung von garantierten Zeitschlitzen beschreibt.

Ein Problem der bekannten Verfahren besteht jedoch darin, dass gemäß dem Standard IEEE 802.15.4 maximal 7 entsprechende garantierte Zeitschlitze an Netzknoten beziehungsweise Teilnehmer des Kommunikationssystems vergeben werden können, so dass maximal 7 Netzknoten des Kommunikationssystems auf Basis entsprechender garantierter Zeitschlitze kommunizieren können. Dies bedeutet, dass entweder die Anzahl der Netzknoten des Kommunikationssystems durch die maximale Anzahl der garantierten Zeitschlitze beschränkt wird oder aber einem Teil der Netzknoten kein garantierter Zeitschlitz zur Verfügung gestellt werden kann, d.h. für die betreffenden Netzknoten ist eine Datenübertragung in einem vorgegebenen Zeitraum, d.h. innerhalb einer vorgegebenen Latenzzeit, nicht gewährleistet. Dies hat letztlich zur Folge, dass entsprechende Kommunikationssysteme, beispielsweise gemäß dem Standard IEEE 802.15.4, bislang in Bereichen, in denen eine deterministische, d.h. ein vorhersagbares Verhalten aufweisende, und damit zuverlässige Kommunikation mit garantierter Latenzzeit erforderlich ist, nicht oder nur wenig verbreitet sind.

Der vorliegenden Erfindung liegt die Aufgabe zugrunde, ein besonders leistungsfähiges und effizientes Verfahren zum Betreiben eines Kommunikationssystems anzugeben, das auch für eine größere Anzahl von Netzknoten eine Datenübertragung mit einer garantierten Latenzzeit ermöglicht.

Diese Aufgabe wird erfindungsgemäß gelöst durch ein Verfahren zum Betreiben eines Kommunikationssystems, bei dem mehrere Netzknoten des Kommunikationssystems zu einer Gruppe zusammengefasst werden, den Netzknoten der Gruppe jeweils eine gemeinsame Adresse zugeordnet wird und zumindest ein garantierter Zeitschlitz innerhalb eines Übertragungsrahmens durch Zuweisung zu der gemeinsamen Adresse den Netzknoten der Gruppe zur alleinigen Nutzung zur Datenübertragung zur Verfügung gestellt wird.

Das erfindungsgemäße Verfahren ist vorteilhaft, da es mehreren Netzknoten die Nutzung eines einzigen garantierten Zeitschlitzes innerhalb eines Übertragungsrahmens zur Datenübertragung ermöglicht. Zu diesem Zwecke werden mehrere der Netzknoten zu einer Gruppe zusammengefasst. Dies kann beispielsweise dadurch geschehen, dass in einer Speichereinrichtung des Kommunikationssystems eine entsprechende Datentabelle abgelegt wird. Aufgrund ihrer Gruppenzugehörigkeit wird den Netzknoten der Gruppe im nächsten Verfahrensschritt eine gemeinsame Adresse zugeordnet. Dies bedeutet, dass ein und dieselbe Adresse von allen Netzknoten der Gruppe verwendet wird. Hierdurch wird es ermöglicht, dass der zumindest eine garantierte Zeitschlitz durch Zuweisung zu dieser gemeinsamen Adresse den Netzknoten der Gruppe zur Datenübertragung zur Verfügung gestellt werden kann. Somit kann der zumindest eine der gemeinsamen Adresse zugewiesene garantierte Zeitschlitz in zeitlicher Abfolge, d.h. in unterschiedlichen Übertragungsrahmen, durch unterschiedliche Netzknoten der Gruppe zur Datenübertragung genutzt werden. Vorteilhafterweise ist hierbei eine Anpassung der verwendeten Netzknoten, etwa durch eine entsprechende Konfiguration oder eine Änderung der Firmware der Netzknoten, nicht erforderlich. Hierdurch wird eine Einführung des erfindungsgemäßen Verfahrens mit vergleichsweise geringem Aufwand ermöglicht.

Es sei darauf hingewiesen, dass im Rahmen des erfindungsgemäßen Verfahrens die Netzknoten des Kommunikationssystems selbstverständlich auch zu mehreren, unterschiedlichen Gruppen zusammengefasst werden können, wobei jeder Netzknoten vorzugsweise jeweils lediglich einer Gruppe zugeordnet ist.

Vorzugsweise ist das erfindungsgemäße Verfahren derart ausgestaltet, dass solche Netzknoten zu einer Gruppe zusammengefasst werden, bei denen eine zeitgleiche Nutzung des der gemeinsamen Adresse zugewiesenen zumindest einen garantierten Zeitschlitzes ausgeschlossen ist. Dies ist vorteilhaft, da hierdurch Kollisionen dadurch, dass mehrere Netzknoten der Gruppe gleichzeitig auf den der gemeinsamen Adresse zugewiesenen Zeitschlitz zuzugreifen versuchen, vermieden werden. Bei entsprechenden zu einer Gruppe zusammengefassten Netzknoten kann es sich beispielsweise um solche handeln, von denen aufgrund ihrer Funktion sichergestellt ist, dass zu jedem Zeitpunkt, d.h. in jedem Übertragungsrahmen, nur einer dieser Netzknoten mittels des garantierten Zeitschlitzes Daten zu übertragen hat. Bei entsprechenden Netzknoten kann es sich beispielsweise um solche handeln, die dem Ausschalten beziehungsweise Einschalten etwa eines Motors dienen, wobei in Abhängigkeit vom jeweiligen Zustand des Motors jeweils nur eine der beiden Funktionen möglich ist. Darüber hinaus können die Netzknoten der Gruppe beispielsweise auch derart räumlich getrennt angeordnet sein, dass aufgrund des Ablaufs eines überwachten Verfahrens die Notwendigkeit einer gleichzeitigen Datenübertragung der Netzknoten der Gruppe unter Verwendung des zumindest einen garantierten Zeitschlitzes ausgeschlossen ist. So kann es sich bei den Netzknoten der Gruppe beispielsweise um entlang einer Strecke montierte Sensoren handeln, die beispielsweise den Weg eines Gutes oder eines Fahrzeuges überwachen. Sofern zu jedem Zeitpunkt lediglich ein entsprechendes Gut beziehungsweise ein entsprechendes Fahrzeug auf der Strecke zugelassen ist, so kann mit Sicherheit ausgeschlossen werden, dass mehrere der Netzknoten des Kommunikationssystems in Form der Sensoren zeitgleich eine Vorbeibewegung bzw. -fahrt des betreffenden Objekts durch eine entsprechende Datenübertragung, beispielsweise an eine zentrale Steuereinheit, melden wollen.

In einer weiteren besonders bevorzugten Ausführungsform ist das erfindungsgemäße Verfahren derart ausgestaltet, dass die Netzknoten anhand einer die Netzknoten jeweils eindeutig identifizierenden erweiterten Adresse zu der Gruppe zusammengefasst werden. Dies bietet den Vorteil, dass das Zusammenfassen der Netzknoten zu der Gruppe unter Verwendung einer üblicherweise für Netzknoten eines Kommunikationssystems bereits definierten erweiterten Adresse, die den betreffenden Netzknoten eindeutig identifiziert, erfolgen kann. Darüber hinaus können die erweiterten Adressen der Netzknoten der Gruppe vorteilhafterweise dazu verwendet werden, einen der Netzknoten dediziert anzusprechen.

Vorzugsweise kann das erfindungsgemäße Verfahren auch derart weitergebildet sein, dass die gemeinsame Adresse den einzelnen Netzknoten der Gruppe jeweils bei ihrer Anmeldung in dem Kommunikationssystem zugeordnet wird. Dies ist vorteilhaft, da in Kommunikationssystemen üblicherweise eine Anmeldung der Netzknoten erforderlich ist. Im Rahmen der in diesem Zusammenhang ablaufenden Kommunikation besteht auf einfache und unnötigen Signalisierungsaufwand vermeidende Art und Weise die Möglichkeit, dem jeweiligen Netzknoten der Gruppe die gemeinsame Adresse zuzuordnen.

Vorteilhafterweise kann das erfindungsgemäße Verfahren auch so ablaufen, dass die Zuweisung des zumindest einen garantierten Zeitschlitzes zu der gemeinsamen Adresse in Antwort auf eine entsprechende Anforderung eines der Netzknoten der Gruppe erfolgt. Dies bedeutet, dass sobald einer der Netzknoten der Gruppe einen garantierten Zeitschlitz anfordert, dieser garantierte Zeitschlitz der gemeinsamen Adresse zugewiesen wird. Dies hat zur Folge, dass nun alle Netzknoten der Gruppe in dem betreffenden garantierten Zeitschlitz kommunizieren, d.h. Daten übertragen, können. Dadurch, dass die Zuweisung des zumindest einen garantierten Zeitschlitzes zu der gemeinsamen Adresse erst in Antwort auf eine entsprechende Anforderung eines der Netzknoten der Gruppe erfolgt, wird vorteilhafterweise eine unnötige, statische Reservierung von Zeitschlitzen durch Netzknoten beziehungsweise Gruppen von Netzknoten vermieden.

In einer weiteren bevorzugten Ausführungsform ist das erfindungsgemäße Verfahren derart ausgeprägt, dass das Zuordnen der gemeinsamen Adresse sowie das Zuweisen des zumindest einen garantierten Zeitschlitzes zu den Netzknoten der Gruppe durch einen Koordinationsknoten des Kommunikationssystems erfolgt. Dies bietet den Vorteil, dass ein einziger zentraler Knoten des Kommunikationssystems in Form des Koordinationsknotens sowohl das Zuordnen der gemeinsamen Adresse als auch das Zuweisen des zumindest einen garantierten Zeitschlitzes zu den Netzknoten der Gruppe vornehmen kann. Vorzugsweise erfolgt dabei auch das Zusammenfassen der mehreren der Netzknoten zu der Gruppe durch den Koordinationsknoten. Zu diesem Zwecke kann der Koordinationsknoten Information zu den bestehenden Gruppen beispielsweise in einer an den Koordinationsknoten angebundenen Speichereinrichtung ablegen und verwalten. Der Koordinationsknoten ist vorzugsweise in einer sternförmigen Anordnung mit den Netzknoten des Kommunikationssystems verbunden, d.h. in diesem Fall erfolgt die Kommunikation zwischen den Netzknoten und den Koordinationsknoten jeweils unmittelbar, d.h. ohne Zwischenschaltung weiterer Netzknoten.

Generell kann das erfindungsgemäße Verfahren in beliebigen Arten von Kommunikationssystemen ablaufen. Dies schließt insbesondere auch drahtgebundene Kommunikationssysteme ein. In einer besonders bevorzugten Weiterbildung des erfindungsgemäßen Verfahrens wird als Kommunikationssystem jedoch ein drahtloses Kommunikationssystem verwendet. Dies ist vorteilhaft, da eine entsprechende drahtlose Verbindung zwischen den Netzknoten des Kommunikationssystems in vielen Fällen von Vorteil ist. So werden insbesondere Kosten und Aufwand für eine entsprechende Verdrahtung beziehungsweise Verkabelung eingespart. Darüber hinaus sind die Übertragungsressourcen in drahtlosen Kommunikationssystemen in der Regel vergleichsweise knapp und damit auch wertvoll, so dass insbesondere in solchen Kommunikationssystemen die Anforderung besteht, die vorhandenen Übertragungsressourcen möglichst effizient zu nutzen und gleichzeitig eine zuverlässige und deterministische Kommunikation zu ermöglichen.

Bei dem drahtlosen Kommunikationssystem kann es sich allgemein um ein Kommunikationssystem gemäß einem beliebigen Kommunikationsstandard handeln. In einer weiteren besonders bevorzugten Ausführungsform des erfindungsgemäßen Verfahrens wird jedoch ein drahtloses Kommunikationssystem gemäß dem Standard IEEE 802.15.4 verwendet. Dies bedeutet insbesondere, dass als Netzknoten Geräte ("devices") im Sinne des Standards IEEE 802.15.4 verwendet werden. Die Verwendung eines Kommunikationssystems gemäß dem Standard 802.15.4 ist vorteilhaft, da dieser Kommunikationsstandard speziell vor dem Hintergrund spezifiziert worden ist, durch einen Verzicht auf unnötige Komplexität und eine Beschränkung auf vergleichsweise niedrige Datenraten den Stromverbrauch der Netzknoten des Kommunikationssystems zu minimieren. Hierdurch werden auch für Batterie betriebene Netzknoten Batterielaufzeiten in der Größenordnung von Monaten oder Jahren erreicht. Darüber hinaus bietet der Standard IEEE 802.15.4 bereits eine Unterstützung für garantierte Zeitschlitze, die an die Netzknoten beziehungsweise Netzwerkteilnehmer vergeben werden können. Aufgrund dieser Eigenschaften ist ein drahtloses Kommunikationssystem gemäß dem Standard IEEE 802.15.4 für eine drahtlose Verbindung von Kommunikationsknoten und für eine Nutzung in Verbindung mit dem erfindungsgemäßen Verfahren besonders geeignet.

Generell kann es sich bei dem Kommunikationssystem um ein in beliebigen Bereichen, Funktionen und für beliebige Anwendungen eingesetztes Kommunikationssystem handeln. In einer besonders bevorzugten Weiterbildung des erfindungsgemäßen Verfahrens wird jedoch ein Kommunikationssystem der Automatisierungstechnik mit Netzknoten in Form von Sensoren und/oder Aktoren verwendet. Dies ist vorteilhaft, da im Bereich der Automatisierungstechnik ein hoher Bedarf an drahtloser Kommunikation zwischen den verschiedenen Komponenten besteht. Da die übertragenen Daten häufig einer zeitkritischen Steuerung dienen oder aus anderen Gründen unmittelbar, ohne zeitliche Verzögerung weiter verarbeitet werden müssen, besteht darüber hinaus insbesondere im Bereich der Automatisierungstechnik die Anforderung, Kommunikationssysteme einzusetzen, die ein vorhersehbares, d.h. definiertes und reproduzierbares, Verhalten aufweisen und bei denen Daten mit einer garantierten Verzögerung, d.h. Latenzzeit, ausgetauscht werden können.

In einer weiteren bevorzugten Ausführungsform läuft das erfindungsgemäße Verfahren so ab, dass zum Austauschen eines der Netzknoten der Gruppe gegen einen weiteren Netzknoten der auszutauschende Netzknoten in der Gruppe durch den weiteren Netzknoten ersetzt wird, dem weiteren Netzknoten die gemeinsame Adresse der Gruppe zugewiesen wird und der auszutauschende Netzknoten aus dem Kommunikationssystem entfernt wird. Diese Weiterbildung des erfindungsgemäßen Verfahrens ist vorteilhaft, da hierdurch beispielsweise ein einfacher Tausch eines Netzknotens etwa in Form einer Baugruppe möglich ist.

Vorzugsweise kann das erfindungsgemäße Verfahren weiterhin derart ausgeprägt sein, dass die Netzknoten des Kommunikationssystems jeweils über einen allgemein zur Datenübertragung verfügbaren Zeitschlitz des Übertragungsrahmens in vorgegebenen zeitlichen Abständen eine Statusinformation versenden. Sofern in vorgegebenen zeitlichen Abständen eine Statusinformation von den Netzknoten des Kommunikationssystems beispielsweise an eine zentrale Steuereinheit übertragen werden soll, so geschieht dies zur Vermeidung eines gleichzeitigen Zugriffs mehrerer Netzknoten der Gruppe auf den garantierten Zeitschlitz vorteilhafterweise auch für die Netzknoten der Gruppe unter Verwendung eines allgemein zur Datenübertragung verfügbaren Zeitschlitzes des Übertragungsrahmens. Entsprechende allgemein verfügbare Zeitschlitze sind beispielsweise in dem Standard IEEE 802.15.4 innerhalb der so genannten "Contention Access Period" verfügbar. Durch die regelmäßige Übertragung einer entsprechenden Statusinformation, die auch als "Heartbeat" bezeichnet wird, wird der Empfänger vorteilhafterweise über die Funktionsfähigkeit des betreffenden Netzknotens informiert.

Die Erfindung betrifft weiterhin einen Koordinationsknoten eines Kommunikationssystems.

Hinsichtlich des Koordinationsknotens des Kommunikationssystems liegt der vorliegenden Erfindung die Aufgabe zugrunde, einen Koordinationsknoten anzugeben, der ein besonders leistungsfähiges und effizientes, auch für eine größere Anzahl von Netzknoten eine Datenübertragung mit einer garantierten Latenzzeit ermöglichendes Verfahren zum Betreiben des Kommunikationssystems unterstützt.

Diese Aufgabe wird erfindungsgemäß gelöst durch einen Koordinationsknoten eines Kommunikationssystems mit Speichermitteln zum Ablegen einer Zuordnung mehrerer Netzknoten des Kommunikationssystems zu einer Gruppe sowie Verarbeitungsmitteln zum Zuordnen einer gemeinsamen Adresse zu den Netzknoten der Gruppe und zum Bereitstellen zumindest eines garantierten Zeitschlitzes innerhalb eines Übertragungsrahmens zur Datenübertragung für die Netzknoten der Gruppe durch Zuweisen des zumindest einen garantierten Zeitschlitzes zu der gemeinsamen Adresse der Netzknoten der Gruppe.

Der erfindungsgemäße Koordinationsknoten ist vorteilhaft, da er es erlaubt, eine Zuordnung mehrerer Netzknoten des Kommunikationssystems zu einer Gruppe in Speichermitteln abzulegen. Dadurch, dass die Verarbeitungsmittel des Koordinationsknotens zum Zuordnen einer gemeinsamen Adresse zu den Netzknoten der Gruppe sowie zum Bereitstellen zumindest eines garantierten Zeitschlitzes innerhalb eines Übertragungsrahmens zur Datenübertragung für die Netzknoten der Gruppe durch Zuweisen des zumindest einen garantierten Zeitschlitzes zu der gemeinsamen Adresse der Netzknoten der Gruppe ausgebildet ist, ermöglicht es der erfindungsgemäße Koordinationsknoten vorteilhafterweise den mehreren Netzknoten der Gruppe, jeweils denselben garantierten Zeitschlitz für eine Datenübertragung zu nutzen. Dies bietet den grundlegenden Vorteil, dass die Anzahl der Netzknoten des Kommunikationssystems, die unter Verwendung eines garantierten Zeitschlitzes beispielsweise mit dem Koordinationsknoten kommunizieren können, nicht durch die Anzahl der in dem Übertragungsrahmen zur Verfügung stehenden garantierten Zeitschlitze beschränkt ist.

In einer besonders bevorzugten Weiterbildung des erfindungsgemäßen Koordinationsknotens sind die Verarbeitungsmittel zum Zuordnen der gemeinsamen Adresse zu den Netzknoten der Gruppe anhand einer die Netzknoten jeweils eindeutig identifizierenden erweiterten Adresse ausgebildet. Dies ist vorteilhaft, da Netzknoten in Kommunikationssystemen üblicherweise bereits über entsprechende erweiterte Adressen identifiziert werden. Diese können somit dazu verwendet werden, in den Speichermitteln des Koordinationsknotens die Netzknoten zu der Gruppe zuzuordnen.

In einer besonders bevorzugten Weiterbildung ist der erfindungsgemäße Koordinationsknoten derart ausgestaltet, dass die Verarbeitungsmittel zum Zuordnen der gemeinsamen Adresse zu den Netzknoten der Gruppe jeweils bei Anmeldung der Netzknoten in dem Kommunikationssystem ausgebildet sind. Hierdurch wird vorteilhafterweise eine besonders einfache und effiziente Zuordnung der gemeinsamen Adresse zu den Netzknoten der Gruppe ermöglicht.

Vorzugsweise ist der erfindungsgemäße Koordinationsknoten derart ausgestaltet, dass die Verarbeitungsmittel zum Zuweisen des zumindest einen garantierten Zeitschlitzes zu der gemeinsamen Adresse in Antwort auf eine entsprechende Anforderung eines der Netzknoten der Gruppe ausgebildet sind. Dies bietet den Vorteil, dass ein garantierter Zeitschlitz den Netzknoten der Gruppe erst dann bereitgestellt wird, wenn zumindest einer der Netzknoten der Gruppe tatsächlich Bedarf für einen entsprechenden garantierten Zeitschlitz angemeldet hat. Vorteilhafterweise wird somit eine unnötige Belegung von garantierten Zeitschlitzen durch eine Gruppe von Netzknoten vermieden.

Bei dem Koordinationsknoten kann es sich um einen Knoten eines beliebigen, beispielsweise drahtgebundenen, Kommunikationssystems handeln. In einer besonders bevorzugten Ausführungsform weist der erfindungsgemäße Koordinationsknoten jedoch zur Verwendung in einem drahtlosen Kommunikationssystem eine Funkschnittstelle auf. Dies bietet den Vorteil, dass der Koordinationsknoten auch in solchen Anwendungsfällen eingesetzt werden kann, in denen drahtgebundene Kommunikationssysteme generell nicht einsetzbar sind oder aufgrund der erforderlichen Verdrahtung mit entsprechenden Nachteilen verbunden sind.

In einer weiteren besonders bevorzugten Ausführungsform ist die Funkschnittstelle gemäß dem Standard IEEE 802.15.4 ausgebildet. Bei diesem Standard handelt es sich vorteilhafterweise um einen besonders einfachen, zuverlässigen und robusten Standard, der insbesondere für Kommunikationssysteme mit vergleichsweise geringer Anzahl von Netzknoten und einer vergleichsweise geringen räumlichen Verteilung vorteilhaft einsetzbar ist. Aus diesem Grund erfährt der Standard IEEE 802.15.4 derzeit in verschiedenen technischen Bereichen eine zunehmende Verbreitung.

Die Erfindung betrifft darüber hinaus ein Kommunikationssystem mit mehreren Netzknoten.

Hinsichtlich des Kommunikationssystems liegt der Erfindung die Aufgabe zugrunde, ein Kommunikationssystem anzugeben, das ein besonders leistungsfähiges und effizientes, auch für eine größere Anzahl von Netzknoten eine Datenübertragung mit einer garantierten Latenzzeit ermöglichendes Verfahren zum Betreiben des Kommunikationssystems unterstützt.

Diese Aufgabe wird erfindungsgemäß gelöst durch ein Kommunikationssystem mit mehreren Netzknoten, das einen erfindungsgemäßen Koordinationsknoten oder einen Koordinationsknoten gemäß einer der zuvor beschriebenen bevorzugten Weiterbildungen des erfindungsgemäßen Koordinationsknotens aufweist.

Hinsichtlich der Vorteile des erfindungsgemäßen Kommunikationssystems sei auf die entsprechenden Ausführungen im Zusammenhang mit dem erfindungsgemäßen Koordinationsknoten sowie seinen bevorzugten Weiterbildungen verwiesen.

Im Folgenden wird die Erfindung anhand eines Ausführungsbeispiels näher erläutert. Hierzu zeigt die
- Figur: zur Erläuterung eines Ausführungsbeispiels des erfindungsgemäßen Verfahrens in einer schematischen Skizze ein Ausführungsbeispiel des erfindungsgemäßen Kommunikationssystems mit einem Ausführungsbeispiel des erfindungsgemäßen Koordinationsknotens.

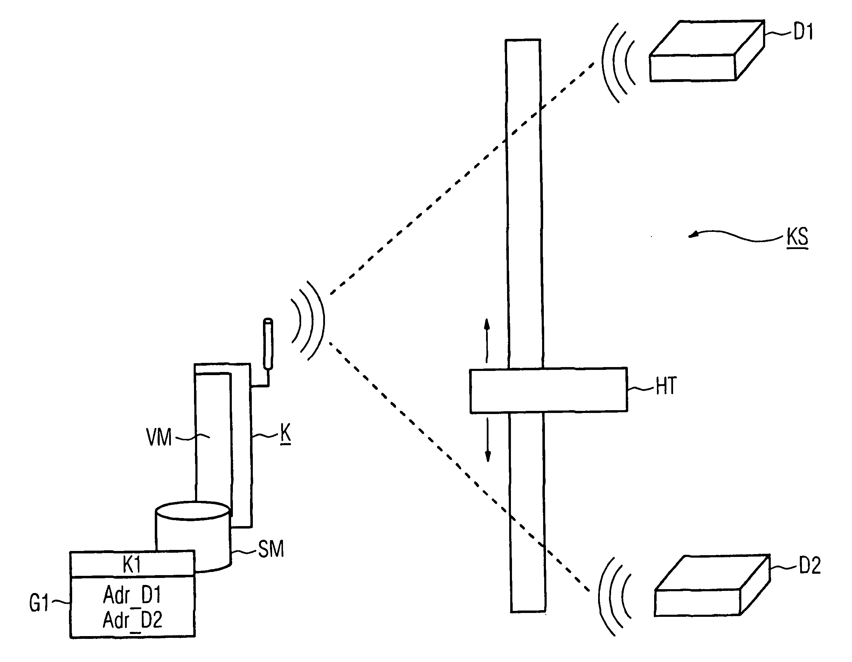

Die Figur zeigt ein Kommunikationssystem KS, das aus einem Koordinationsknoten K sowie zwei Netzknoten D1, D2 besteht. Dabei sei angenommen, dass es sich bei den Netzknoten D1, D2 um die Endschalter beziehungsweise Endlagenschalter eines Hubtisches HT handelt. Darüber hinaus sei angenommen, dass zur Kommunikation zwischen den Netzknoten D1, D2 und dem Koordinationsknoten K, bei dem es sich etwa um eine zentrale Steuereinheit handeln kann, innerhalb des Kommunikationssystems KS der Standard IEEE 802.15.4 verwendet wird. Um beim Erreichen des oberen beziehungsweise des unteren Endlagenschalters in Form der Netzknoten D1 beziehungsweise D2 durch den Hubtisch HT das Eintreten dieses Ereignisses unmittelbar an den Koordinationsknoten K übertragen zu können, ist sicherzustellen, dass die Übertragung dieser Information beziehungsweise der entsprechenden Daten deterministisch, d.h. zuverlässig und vorhersagbar, und mit einer garantierten Latenzzeit von beispielsweise weniger als 15 ms erfolgt. Eine entsprechende Datenübertragung ist auch bei vielen anderen technischen Lösungen, insbesondere im Bereich der Automatisierungstechnik, erforderlich. So besteht üblicherweise die Anforderung, dass in Prozess-Steuerungen Prozesswerte von Sensoren und Aktoren zuverlässig und schnell mit einer zentralen Steuerungseinheit ausgetauscht werden können. Hierzu bietet der Standard IEEE 802.15.4 vorteilhafterweise eine Unterstützung für garantierte Zeitschlitze innerhalb eines Übertragungsrahmens, die an die Netzwerkteilnehmer, d.h. die Netzknoten D1, D2, vergeben werden können, wodurch eine zyklische Datenübertragung mit einer garantierten Latenzzeit, die im Wesentlichen durch die zeitliche Länge eines Übertragungsrahmens bestimmt wird, sichergestellt wird.

Allerdings sind in dem entsprechenden Standard höchstens 7 solche garantierten Zeitschlitze vorgesehen, so dass maximal 7 Netzknoten auf Basis der garantierten Zeitschlitze mit dem Koordinationsknoten K kommunizieren können. Da die in der Praxis eingesetzten Systeme häufig komplexer als das in der Figur dargestellte Ausführungsbeispiel sind, und daher in vielen Fällen mehr als 7 Netzknoten in einem entsprechenden Kommunikationssystem vorhanden sind, besteht in einem solchen Fall das Problem, dass nicht allen Netzknoten eines solchen Kommunikationssystems ein entsprechender garantierter Zeitschlitz zur Datenübertragung zur Verfügung gestellt werden kann.

Im Rahmen des beschriebenen Ausführungsbeispiels der Erfindung wird dieses Problem dadurch gelöst, dass in Speichermitteln SM des Koordinationsknotens K die beiden Netzknoten D1, D2 einer Gruppe G1 zugeordnet werden. Dies geschieht dadurch, dass in einer Tabelle in den Speichermitteln SM die Netzknoten D1, D2 der Gruppe G1 jeweils eindeutig identifizierende erweiterte Adressen Adr_D1, Adr_D2, die im Rahmen des Standards IEEE 802.15.4 auch als statische oder erweiterte ("extended") Adressen bezeichnet werden, abgelegt werden. Darüber hinaus ist in der entsprechenden Datenbanktabelle der Gruppe G1 eine gemeinsame Adresse K1, etwa in Form einer Kurzadresse, abgelegt, die für alle Netzknoten D1, D2 der Gruppe gültig ist. Sofern sich nun die beiden Netzknoten D1, D2 in beliebiger zeitlicher Abfolge bei dem Koordinationsknoten K des Kommunikationssystems KS anmelden, so vergibt der Koordinationsknoten K des Kommunikationssystems KS an beide Netzknoten D1, D2 jeweils dieselbe gemeinsame Adresse K1, bei der es sich im beschriebenen Ausführungsbeispiel um eine dynamische Kurzadresse handeln soll. Zum Zuordnen der gemeinsamen Adresse K1 zu den Netzknoten D1, D2 der Gruppe G1 weist der Koordinationsknoten K Verarbeitungsmittel VM auf.

Es sei darauf hingewiesen, dass grundsätzlich selbstverständlich auch mehr als zwei Netzknoten zu einer Gruppe zusammengefasst werden können. Darüber hinaus besteht innerhalb eines Kommunikationssystems auch die Möglichkeit, die vorhandenen Netzknoten zu mehreren unterschiedlichen Gruppen zusammen zu fassen.

Sofern nun einer der beiden Netzknoten D1, D2 bei dem Koordinationsknoten K einen garantierten Zeitschlitz zur alleinigen Nutzung zur Datenübertragung anfordert, so wird dieser garantierte Zeitschlitz durch Zuweisung zu der gemeinsamen Adresse K1 den Netzknoten D1, D2 der Gruppe G1 zur Datenübertragung zur Verfügung gestellt. Dies bedeutet, dass der betreffende garantierte Zeitschlitz von anderen Netzknoten des Kommunikationssystems KS, die in der Figur aus Gründen der Übersichtlichkeit nicht dargestellt sind, nicht genutzt werden darf. Das Bereitstellen des zumindest einen garantierten Zeitschlitzes innerhalb des Übertragungsrahmens zur Datenübertragung für die Netzknoten D1, D2 der Gruppe G1 durch Zuweisen des zumindest einen garantierten Zeitschlitzes zu der gemeinsamen Adresse K1 der Netzknoten D1, D2 der Gruppe G1 erfolgt ebenfalls durch die Verarbeitungsmittel VM des Koordinationsknotens K.

Vorteilhafterweise werden in der Gruppe G1 ausschließlich solche Netzknoten D1, D2 bzw. Geräte zusammengefasst, für die eine zeitgleiche Nutzung des ihnen zugewiesenen garantierten Zeitschlitzes des Übertragungsrahmens ausgeschlossen ist. Hierdurch wird eine entsprechende Kollision bei der Verwendung des garantierten Zeitschlitzes innerhalb desselben Obertragungsrahmens vermieden. Dies kann beispielsweise durch eine entsprechende räumliche beziehungsweise funktionale Trennung der Netzknoten D1, D2 gewährleistet werden. So ist in dem Ausführungsbeispiel der Figur eindeutig erkennbar, dass mit Sicherheit jeweils nur der Netzknoten D1 oder der Netzknoten D2 das Erreichen der oberen oder der unteren Endlage des Hubtisches HT melden und hierzu den garantierten Zeitschlitz nutzen wird. Eine gleichzeitige Nutzung des garantierten Zeitschlitzes durch die Netzknoten D1, D2 ist somit ausgeschlossen.

Sofern beispielsweise der Netzknoten D1 etwa im Rahmen eines Baugruppentauschs durch einen weiteren Netzknoten ersetzt werden soll, so kann dies vorteilhafterweise derart geschehen, dass zunächst der Netzknoten D1 aus dem Kommunikationssystem KS entfernt wird. Daraufhin wird in den Speichermitteln SM des Koordinationsknotens K innerhalb der Tabelle der Gruppe G1 der Eintrag der erweiterten Adresse Adr_D1 des Netzknotens D1 durch die erweiterte Adresse des weiteren Netzknotens ersetzt. Der weitere Netzknoten kann sich nun bei dem Kommunikationssystem KS beziehungsweise dem Koordinationsknoten K des Kommunikationssystems KS anmelden und erhält aufgrund des Eintrags in der Tabelle der Gruppe G1 automatisch die gemeinsame Adresse K1 zugewiesen, die zuvor auch an den Netzknoten D1 vergeben war. Dies hat zur Folge, dass sich nun der weitere Netzknoten die Nutzung des betreffenden garantierten Zeitschlitzes mit dem Netzknoten D2 teilt.

Sofern eine regelmäßige Übertragung von Statusinformationen von den Netzknoten D1, D2 etwa an den Koordinationsknoten K erwünscht sein sollte, so kann dies vorzugsweise derart geschehen, dass die entsprechenden Daten, etwa in Form eines so genannten "Heartbeats", jeweils von den betreffenden Netzknoten D1, D2 über einen allgemein zur Datenübertragung verfügbaren Zeitschlitz des Übertragungsrahmens gesendet werden. Dies bedeutet, dass für eine entsprechende Statusinformation gerade nicht der der Gruppe G1 zugeordnete garantierte Zeitschlitz verwendet wird. Hierdurch wird es vermieden, dass die Netzknoten D1, D2 zur Versendung einer entsprechenden Statusinformation gleichzeitig, d.h. in demselben Übertragungsrahmen, eine Nutzung des garantierten Zeitschlitzes versuchen. Da eine entsprechende Statusinformation üblicherweise in wesentlich größeren zeitlichen Abständen und unter Tolerierung einer deutlich größeren Latenzzeit als für zeitkritische Datenübertragungen erfolgen kann, ist eine garantierte Zykluszeit in diesem Fall nicht erforderlich, so dass eine Verwendung des garantierten Zeitschlitzes nicht erforderlich ist.

Generell besteht im Rahmen des erfindungsgemäßen Verfahrens vorteilhafterweise kein Projektierungsaufwand für die Netzknoten D1, D2 des Kommunikationssystems KS. So ist im Vergleich zu bekannten Verfahren insbesondere keine Firmware-Änderung auf den Netzknoten D1, D2 erforderlich, so dass übliche Standard-Netzknoten verwendet werden können. Darüber hinaus erfolgt die Gruppierung der Netzknoten D1, D2 vorteilhafterweise ausschließlich auf dem Koordinationsknoten K, für den zur Einführung des erfindungsgemäßen Verfahrens ausschließlich Software-Änderungen erforderlich sind. Des Weiteren ist eine Änderung des verwendeten Protokolls, d.h. in dem Ausführungsbeispiel der Figur des Protokolls IEEE 802.15.4, in der Regel nicht erforderlich.

Sofern der Koordinationsknoten K einen der Netzknoten D1, D2 dediziert ansprechen möchte, so ist dies unter Verwendung der jeweiligen erweiterten Adresse Adr_D1, Adr_D2 unabhängig von der Zugehörigkeit des Netzknotens D1, D2 zu der Gruppe G1 weiterhin möglich.

Im Vergleich zu bekannten Verfahren vervielfacht sich durch die Anwendung des erfindungsgemäßen Verfahrens die Anzahl der Netzknoten D1, D2, die einen garantierten Zeitschlitz nutzen können. Die Anzahl der zu einer Gruppe G1 zusammenfassbaren Netzknoten D1, D2 ist dabei nicht grundsätzlich beschränkt, sondern von den jeweiligen anwendungsspezifischen Gegebenheiten abhängig. Gleichzeitig bleibt die innerhalb des Kommunikationssystems KS erreichbare Latenzzeit vorteilhafterweise unverändert, so dass die Qualität der Datenübertragung sich nicht verschlechtert. Seitens eines Daten von einem der Netzknoten D1, D2 unter Verwendung des garantierten Zeitschlitzes empfangenden Gerätes, etwa in Form des Koordinationsknotens K, kann weiterhin entweder anhand der empfangenen Daten selbst oder aus dem jeweiligen Zusammenhang heraus erkannt werden, welcher der Netzknoten D1, D2 die betreffenden Daten jeweils übermittelt hat.

## Patentansprüche

1. Verfahren zum Betreiben eines Kommunikationssystems (KS), bei dem
- mehrere Netzknoten (D1, D2) des Kommunikationssystems (KS) zu einer Gruppe (G1) zusammengefasst werden,
- den Netzknoten (D1, D2) der Gruppe (G1) jeweils eine gemeinsame Adresse (K1) zugeordnet wird
**dadurch gekennzeichnet, dass**
- zumindest ein garantierter Zeitschlitz innerhalb eines Übertragungsrahmens durch Zuweisung zu der gemeinsamen Adresse (K1) den Netzknoten (D1, D2) der Gruppe (G1) zur alleinigen Nutzung zur Datenübertragung zur Verfügung gestellt wird.

2. Verfahren nach Anspruch 1,
**dadurch gekennzeichnet, dass** solche Netzknoten (D1, D2) zu einer Gruppe (G1) zusammengefasst werden, bei denen eine zeitgleiche Nutzung des der gemeinsamen Adresse (K1) zugewiesenen zumindest einen garantierten Zeitschlitzes ausgeschlossen ist.

3. Verfahren nach Anspruch 1 oder 2,
**dadurch gekennzeichnet, dass** die Netzknoten (D1, D2) anhand einer die Netzknoten (D1, D2) jeweils eindeutig identifizierenden erweiterten Adresse (Adr_D1, Adr_D2) zu der Gruppe (G1) zusammengefasst werden.

4. Verfahren nach einem der vorangehenden Ansprüche,
**dadurch gekennzeichnet, dass** die gemeinsame Adresse (K1) den einzelnen Netzknoten (D1, D2) der Gruppe (G1) jeweils bei ihrer Anmeldung in dem Kommunikationssystem (KS) zugeordnet wird.

5. Verfahren nach einem der vorangehenden Ansprüche,
**dadurch gekennzeichnet, dass** die Zuweisung des zumindest einen garantierten Zeitschlitzes zu der gemeinsamen Adresse (K1) in Antwort auf eine entsprechende Anforderung eines der Netzknoten (z.B. D1) der Gruppe (G1) erfolgt.

6. Verfahren nach einem der vorangehenden Ansprüche,
**dadurch gekennzeichnet, dass** das Zuordnen der gemeinsamen Adresse (K1) sowie das Zuweisen des zumindest einen garantierten Zeitschlitzes zu den Netzknoten (D1, D2) der Gruppe (G1) durch einen Koordinationsknoten (K) des Kommunikationssystems (KS) erfolgt.

7. Verfahren nach einem der vorangehenden Ansprüche,
**dadurch gekennzeichnet, dass** ein drahtloses Kommunikationssystem verwendet wird.

8. Verfahren nach Anspruch 7,
**dadurch gekennzeichnet, dass** ein drahtloses Kommunikationssystem gemäß dem Standard IEEE 802.15.4 verwendet wird.

9. Verfahren nach einem der vorangehenden Ansprüche,
**dadurch gekennzeichnet, dass** ein Kommunikationssystem der Automatisierungstechnik mit Netzknoten (D1, D2) mit Sensoren und/oder Aktoren verwendet wird.

10. Verfahren nach einem der vorangehenden Ansprüche,
**dadurch gekennzeichnet, dass** zum Austauschen eines der Netzknoten (z.B. D1) der Gruppe (G1) gegen einen weiteren Netzknoten
- der auszutauschende Netzknoten (D1) in der Gruppe (G1) durch den weiteren Netzknoten ersetzt wird,
- dem weiteren Netzknoten die gemeinsame Adresse (K1) der Gruppe (G1) zugewiesen wird und
- der auszutauschende Netzknoten (D1) aus dem Kommunikationssystem (KS) entfernt wird.

11. Verfahren nach einem der vorangehenden Ansprüche,
**dadurch gekennzeichnet, dass** die Netzknoten (D1, D2) des Kommunikationssystems (KS) jeweils über einen allgemein zur Datenübertragung verfügbaren Zeitschlitz des Übertragungsrahmens in vorgegebenen zeitlichen Abständen eine Statusinformation versenden.

12. Koordinationsknoten (K) eines Kommunikationssystems (KS) mit
- Speichermitteln (SM) zum Ablegen einer Zuordnung mehrerer Netzknoten (D1, D2) des Kommunikationssystems (KS) zu einer Gruppe (G1),
- Verarbeitungsmitteln (VM)
- zum Zuordnen einer gemeinsamen Adresse (K1) zu den Netzknoten (D1, D2) der Gruppe (G1), **gekennzeichnet dadurch dass** die Verarbeitungsmittel konfiguriert sind zum Bereitstellen zumindest eines garantierten Zeitschlitzes innerhalb eines Übertragungsrahmens zur Datenübertragung für die Netzknoten (D1, D2) der Gruppe (G1) durch Zuweisen des zumindest einen garantierten Zeitschlitzes zu der gemeinsamen Adresse (K1) der Netzknoten (D1, D2) der Gruppe (G1).

13. Koordinationsknoten nach Anspruch 12,
**dadurch gekennzeichnet, dass** die Speichermittel (SM) zum Zuordnen der Netzknoten (D1, D2) zu der Gruppe (G1) anhand einer die Netzknoten (D1, D2) jeweils eindeutig identifizierenden erweiterten Adresse (Adr_D1, Adr_D2) ausgebildet sind.

14. Koordinationsknoten nach Anspruch 12 oder 13,
**dadurch gekennzeichnet, dass** die Verarbeitungsmittel (VM) zum Zuordnen der gemeinsamen Adresse (K1) zu den Netzknoten (D1, D2) der Gruppe (G1) jeweils bei Anmeldung der Netzknoten (D1, D2) in dem Kommunikationssystem (KS) ausgebildet sind.

15. Koordinationsknoten nach einem der Ansprüche 12 bis 14,
**dadurch gekennzeichnet, dass** die Verarbeitungsmittel (VM) zum Zuweisen des zumindest einen garantierten Zeitschlitzes zu der gemeinsamen Adresse (K1) in Antwort auf eine entsprechende Anforderung eines der Netzknoten (z.B. D1) der Gruppe (G1) ausgebildet sind.

16. Koordinationsknoten nach einem der Ansprüche 12 bis 15,
**dadurch gekennzeichnet, dass** er zur Verwendung in einem drahtlosen Kommunikationssystem eine Funkschnittstelle aufweist.

17. Koordinationsknoten nach Anspruch 16,
**dadurch gekennzeichnet, dass** die Funkschnittstelle gemäß dem Standard IEEE 802.15.4 ausgebildet ist.

18. Kommunikationssystem mit mehreren Netzknoten,
**dadurch gekennzeichnet, dass** es einen Koordinationsknoten (K) nach einem der Ansprüche 12 bis 17 aufweist.

## Claims

1. Method for operating a communications system (KS) in which
- a plurality of network nodes (Dl, D2) in the communications system (KS) are combined to form a group (G1),
- the network nodes (Dl, D2) in the group (G1) are each allocated a common address (K1),
- at least one guaranteed time slot within a transmission frame is made available to the network nodes (Dl, D2) in the group (G1) for sole use for transmitting data by assigning it to the common address (K1).

2. Method according to claim 1, **characterised in that** such network nodes (Dl, D2) are combined to form a group (G1) in which the at least one guaranteed time slot assigned to the common address (K1) is prevented from being used simultaneously.

3. Method according to claim 1 or 2, **characterised in that** the network nodes (Dl, D2) are combined to form the group (G1) based on an extended address (Adr_D1, Adr_D2) which in each case unambiguously identifies the network nodes (Dl, D2).

4. Method according to one of the preceding claims, **characterised in that** the common address (K1) is assigned to the individual network nodes (Dl, D2) in the group (G1) in each case when they log on to the communications system (KS).

5. Method according to one of the preceding claims, **characterised in that** the at least one guaranteed time slot is assigned to the common address (K1) in response to an appropriate request from one of the network nodes (e.g. D1) in the group (G1).

6. Method according to one of the preceding claims, **characterised in that** the assignment of the common address (K1) and the assignment of the at least one guaranteed time slot to the network nodes (Dl, D2) in the group (G1) is carried out by a coordination node (K) in the communications system (KS).

7. Method according to one of the preceding claims, **characterised in that** a wireless communications system is used.

8. Method according to claim 7, **characterised in that** a wireless communications system according to the IEEE 802.15.4 standard is used.

9. Method according to one of the preceding claims, **characterised in that** an automation technology communications system with network nodes (Dl, D2) with sensors and/or actuators is used.

10. Method according to one of the preceding claims, **characterised in that** to change one of the network nodes (e.g. D1) in the group (G1) for another network node
- the network node (Dl) in the group (G1) to be changed is replaced by the other network node,
- the common address (K1) of the group (G1) is assigned to the other network node, and
- the network node (Dl) to be changed is removed from the communications system (KS).

11. Method according to one of the preceding claims, **characterised in that** the network nodes (Dl, D2) in the communications system (KS) each transmit status information at specified time intervals via a time slot of the transmission frame which is generally available for transmitting data.

12. Coordination node (K) of a communications system (KS) having
- memory means (SM) for storing an assignment of a plurality of network nodes (Dl, D2) in the communications system (KS) to a group (G1),
- processing means (VM)
- for assigning a common address (K1) to the network nodes (Dl, D2) in the group (G1), **characterised in that** the processing means are configured for providing at least one guaranteed time slot within a transmission frame to transmit data for the network nodes (Dl, D2) in the group (G1) by assigning the at least one guaranteed time slot to the common address (K1) of the network nodes (Dl, D2) in the group (G1) .

13. Coordination node according to claim 12, **characterised in that** the memory means (SM) for assigning the network nodes (Dl, D2) to the group (G1) are designed based on an extended address (Adr_D1, Adr_D2) which unambiguously identifies the network nodes (Dl, D2) in each case.

14. Coordination node according to claim 12 or 13, **characterised in that** the processing means (VM) are designed to assign the common address (K1) to the network nodes (Dl, D2) in the group (G1) whenever the network nodes (Dl, D2) log on to the communications system (KS).

15. Coordination node according to one of claims 12 to 14, **characterised in that** the processing means (VM) are designed to assign the at least one guaranteed time slot to the common address (K1) in response to an appropriate request from one of the network nodes (e.g. D1) in the group (G1).

16. Coordination node according to one of claims 12 to 15, **characterised in that** it has a wireless interface for use in a wireless communications system.

17. Coordination node according to claim 16, **characterised in that** the wireless interface is designed according to the IEEE 802.15.4 standard.

18. Communications system with a plurality of network nodes, **characterised in that** it has a coordination node (K) according to one of claims 12 to 17.

## Revendications

1. Procédé pour faire fonctionner un système de communication (KS), selon lequel :
- plusieurs noeuds de réseau (Dl, D2) du système de communication (KS) sont regroupés en un groupe (G1) ;
- respectivement une adresse commune (K1) est associée aux noeuds de réseau (Dl, D2) du groupe (G1),
**caractérisé en ce que**, dans une trame de transmission, au moins un créneau temporel garanti est mis, par affectation à l'adresse commune (K1), à la disposition des noeuds de réseau (Dl, D2) du groupe (G1) pour utilisation exclusive aux fins de la transmission de données.

2. Procédé selon la revendication 1, **caractérisé en ce que** sont regroupés en un groupe (G1) des noeuds de réseau (Dl, D2) pour lesquels est exclue une utilisation simultanée de l'au moins un créneau temporel garanti affecté à l'adresse commune (K1).

3. Procédé selon la revendication 1 ou 2, **caractérisé en ce que** les noeuds de réseau (Dl, D2) sont regroupés pour former le groupe (G1) à l'aide d'une adresse élargie (Adr_D1, Adr_D2) qui identifie respectivement de manière univoque les noeuds de réseau (Dl, D2).

4. Procédé selon l'une des revendications précédentes, **caractérisé en ce que** l'adresse commune (K1) est associée aux différents noeuds de réseau (Dl, D2) du groupe (G1) respectivement lors de leur connexion au système de communication (KS).

5. Procédé selon l'une des revendications précédentes, **caractérisé en ce que** l'affectation de l'au moins un créneau temporel garanti à l'adresse commune (K1) s'effectue en réponse à une requête correspondante de l'un des noeuds de réseau (par exemple, D1) du groupe (G1).

6. Procédé selon l'une des revendications précédentes, **caractérisé en ce que** l'association de l'adresse commune (K1) et l'affectation de l'au moins un créneau temporel garanti aux noeuds de réseau (Dl, D2) du groupe (G1) s'effectue par un noeud de coordination (K) du système de communication (KS).

7. Procédé selon l'une des revendications précédentes, **caractérisé par** l'utilisation d'un système de communication sans fil.

8. Procédé selon la revendication 7, **caractérisé par** l'utilisation d'un système de communication sans fil selon la norme IEEE 802.15.4.

9. Procédé selon l'une des revendications précédentes, **caractérisé par** l'utilisation d'un système de communication de la technique d'automatisation avec des noeuds de réseau (Dl, D2) comportant des capteurs et/ou des actionneurs.

10. Procédé selon l'une des revendications précédentes, **caractérisé en ce que**, pour remplacer l'un des noeuds de réseau (par exemple, D1) du groupe (G1) par un autre noeud de réseau,
- le noeud de réseau (Dl) à remplacer, dans le groupe (G1), est remplacé par l'autre noeud de réseau ;
- l'adresse commune (K1) du groupe (G1) est affectée à l'autre noeud de réseau et
- le noeud de réseau à remplacer (Dl) est supprimé du système de communication (KS).

11. Procédé selon l'une des revendications précédentes, **caractérisé en ce que** les noeuds de réseau (Dl, D2) du système de communication (KS) envoient une information de statut à intervalles de temps prédéterminés respectivement sur un créneau temporel, généralement disponible pour la transmission de données, de la trame de transmission.

12. Noeud de coordination (K) d'un système de communication (KS), comportant :
- des moyens de mémoire (SM) pour déposer une association de plusieurs noeuds de réseau (Dl, C2) du système de communication (KS) à un groupe (G1) ;
- des moyens de traitement (VM) pour associer une adresse commune (K1) aux noeuds de réseau (Dl, D2) du groupe (G1) ;
**caractérisé en ce que** les moyens de traitement sont configurés pour, aux fins de la transmission de données, mettre, dans une trame de transmission, au moins un créneau temporel garanti à la disposition des noeuds de réseau (Dl, D2) du groupe (G1) par affectation de l'au moins un créneau temporel garanti à l'adresse commune (K1) des noeuds de réseau (Dl, D2) du groupe (G1).

13. Noeud de coordination selon la revendication 12, **caractérisé en ce que** les moyens de mémoire (SM) sont conçus pour associer les noeuds de réseau (Dl, D2) au groupe (G1) à l'aide d'une adresse élargie (Adr_D1, Adr_D2) qui identifie respectivement de manière univoque les noeuds de réseau (Dl, D2).

14. Noeud de coordination selon la revendication 12 ou 13, **caractérisé en ce que** les moyens de traitement (VM) sont conçus pour associer l'adresse commune (K1) aux noeuds de réseau (Dl, D2) du groupe (G1) respectivement lors de la connexion des noeuds de réseau (Dl, D2) au système de communication (KS).

15. Noeud de coordination selon l'une des revendications 12 à 14, **caractérisé en ce que** les moyens de traitement (VM) sont conçus pour affecter l'au moins un créneau temporel garanti à l'adresse commune (K1) en réponse à une requête correspondante de l'un des noeuds de réseau (par exemple, D1) du groupe (G1).

16. Noeud de coordination selon l'une des revendications 12 à 15, **caractérisé en ce qu'**il présente une interface radio pour être utilisé dans un système de communication sans fil.

17. Noeud de coordination selon la revendication 16, **caractérisé en ce que** l'interface radio est réalisée selon la norme IEEE 802.15.4.

18. Système de communication comportant plusieurs noeuds de réseau, **caractérisé en ce qu'**il comporte un noeud de coordination (K) selon l'une des revendications 12 à 17.
